# EUROPEAN PATENT APPLICATION

(11) **EP 2 348 470 A1**
(43) Date of publication of application: **27.07.2011**
(21) Application number: 09180334.6
(22) Date of filing: 22.12.2009
(51) Int. Cl.: G06Q 10/00

(54) **Method and apparatus for providing reminders**

(71) Applicant: RESEARCH IN MOTION LIMITED, Waterloo, Ontario N2L 3W8 (CA)
(72) Inventor: Logan, Adrian Michael, Waterloo Ontario N2L 5Z5 (CA); Garg, Neeraj, Waterloo Ontario N2L 5Z5 (CA)
(74) Representative: MERH-IP Matias Erny Reichl Hoffmann

(57) **Abstract**

A method and computing device for providing task reminder data associated with event data stored in a database is provided. The computing device comprises a processing unit interconnected with a memory device. A list of tasks associated with the event data is received, each respective task in the list of tasks associated with task data. Respective reminder times for each task are determined at the processing unit, such that a display device can be controlled to provide respective representations of the task data, in association with the event data, at respective times substantially similar to each respective reminder time. The list of tasks is stored in the database in association with the event data. Input data is received, indicative that at least one of a start time and an end time of an event associated with the event data has changed to a respective new start time and new end time. For each task in the list of tasks, a given respective reminder time is changed to a new given respective reminder time based on at least one of the new start time and the new end time when the given respective reminder time comprises a time relative to at least one of the start time and the end time.

## Description

### FIELD

The specification relates generally to databases, and specifically to a method and apparatus for providing reminders.

### BACKGROUND

General lack of management tools for events organized via a computing device can lead to inefficient use of computing resources at the computing device. For example, tasks associated with an event must all be individually managed, stored at the computing device and retrieved from a memory via receipt of input data, task data being only notionally linked to the event.

### SUMMARY

Often times certain tasks need to be accomplished before an event occurs. For example, copies of a meeting agenda can be printed to bring to an event, and/or a presentation is to be completed for the event. While reminders of the start of the event can be provided in applications, task reminders must be individually created, stored and provided in applications. If an event is scheduled a long time in advance, and then moved, any task reminders individually created can be forgotten, and not provided at an appropriate time, such that it is too late to complete a task before the event starts (and/or task reminders are provided after the fact). This leads to inefficient use of computing resources as firstly task data must be individually managed, and secondly as events are moved, reminders for task data are either provided at inappropriate times and/or individually updated to accommodate changes to the event.

A first aspect of the specification provides a method for providing task reminder data associated with event data stored in a database associated with a computing device, the computing device comprising a processing unit interconnected with a memory device. The method comprises: receiving, at the processing unit, a list of tasks associated with the event data, each respective task in the list of tasks associated with task data; determining, at the processing unit, respective reminder times for each task such that a display device can be controlled to provide respective representations of the task data, in association with the event data, at respective times substantially similar to each the respective reminder time; storing the list of tasks in the database in association with the event data; receiving input data, at the processing unit, the input data indicative that at least one of a start time and an end time of an event associated with the event data has changed to a respective new start time and new end time; and, for each task in the list of tasks, changing a given respective reminder time to a new given respective reminder time based on at least one of the new start time and the new end time when the given respective reminder time comprises a time relative to at least one of the start time and the end time for providing a representation of associated task data.

The method can further comprise: comparing a current time to a given respective reminder time via a clock device; and when the current time substantially matches the given respective reminder time, controlling a display device to provide a representation of associated task data in association with the event data.

The new given respective reminder time can be constrained to at least one of days designated having a given property and times designated as free in an associated database.

The task data can each comprise a respective identifier of an invitee to the calendared event assigned to complete an associated task. The method can further comprise transmitting the data to a second computing device associated with the respective identifier, along with a subset of the task data associated with a given respective identifier, such that a display device associated with the second computing device can be controlled to provide a representation of the subset in association with the event data.

Each reminder time data can comprise a time for providing a reminder that an associated task is to be completed.

A first subset of the tasks can be categorized for completion before a start time of the event, a second subset of the tasks can be categorized for completion during the event, and a third subset of the tasks can be categorized for completion after the event.

Receiving the list of tasks can comprise receiving input data representative of each the task, the method further comprising storing the input data in the memory device in association with the event data for at least one of providing the representation of the task data and updating the list of tasks. Receiving the input data representative of the tasks can occur in association with generating the event data.

The method can further comprise receiving input data representative of at least one of adding and removing at least one task from the list of tasks, and updating the list of tasks by respectively adding the at least one item to the list of tasks and removing the at least one item from the list of tasks, wherein the receiving the input data occur at least one of before the calendared event, during the event, and after the calendared event.

The task data can comprise permission data for changing the task data, the permission data comprising at least one of universal task permission data, individual task permission data, and permission data for respective invitees to the calendared event.

A second aspect of the specification provides a computing device for providing task reminder data associated with event data. The computing device comprises a processing unit interconnected with a memory device. The processing unit has access to a database storing the data. The processing unit is enabled to: receive a list of tasks associated with the event data, each respective task in the list of tasks associated with task data; determine respective reminder times for each task such that a display device can be controlled to provide respective representations of the task data, in association with the event data, at respective times substantially similar to each the respective reminder time; store the list of tasks in the database in association with the event data; receive input data indicative that at least one of a start time and an end time of an event associated with the event data has changed to a respective new start time and new end time; and, for each task in the list of tasks, change a given respective reminder time to a new given respective reminder time based on at least one of the new start time and the new end time when the given respective reminder time comprises a time relative to at least one of the start time and the end time for providing a representation of associated task data.

The processing unit can be further enabled to: compare a current time to a given respective reminder time via a clock device; and when the current time substantially matches the given respective reminder time, control a display device to provide a representation of associated task data in association with the event data.

The new given respective reminder time can be constrained to at least one of days having a given property and times designated as free in an associated database.

The task data can each comprise a respective identifier of an invitee to the calendared event assigned to complete an associated task. The processing unit can be further enabled to transmit the data to a second computing device associated with the respective identifier, along with a subset of the task data associated with a given respective identifier, such that a display device associated with the second computing device can be controlled to provide a representation of the subset in association with the event data.

Each reminder time data can comprise a time for providing a reminder that an associated task is to be completed.

A first subset of the tasks can be categorized for completion before a start time of the event, a second subset of the tasks can be categorized for completion during the event, and a third subset of the tasks can be categorized for completion after the event.

The processing unit can be further enabled to receive the list of tasks by receiving input data representative of each the task, and the processing unit can be further enabled to store the input data in the memory device in association with the event data for at least one of providing the representation of the task data and updating the list of tasks. The processing unit can be further enabled to receive the input data representative of the tasks in association with generating the event data.

The processing unit can be further enabled to receive input data representative of at least one of adding and removing at least one task from the list of tasks, and update the list of tasks by respectively adding the at least one item to the list of tasks and removing the at least one item from the list of tasks, wherein the input data is received at least one of before the calendared event, during the event, and after the calendared event.

The task data can comprise permission data for changing the task data, the permission data comprising at least one of universal task permission data, individual task permission data, and permission data for respective invitees to the calendared event.

A third aspect of the specification provides a computer program product, comprising a computer usable medium having a computer readable program code adapted to be executed to implement a method for providing task reminder data associated with event data stored in a database associated with a computing device, the computing device comprising a processing unit interconnected with a memory device, the method comprising: receiving, at the processing unit, a list of tasks associated with the event data, each respective task in the list of tasks associated with task data; determining, at the processing unit, respective reminder times for each the task such that a display device can be controlled to provide respective representations of the task data, in association with the event data, at respective times substantially similar to each the respective reminder time; storing the list of tasks in the database in association with the event data receiving input data, at the processing unit, the input data indicative that at least one of a start time and an end time of an event associated with the event data has changed to a respective new start time and new end time; and, for each task in the list of tasks, changing a given respective reminder time to a new given respective reminder time based on at least one of the new start time and the new end time when the given respective reminder time comprises a time relative to at least one of the start time and the end time for providing a representation of associated task data.

### BRIEF DESCRIPTIONS OF THE DRAWINGS

Example embodiments are described with reference to the following Figures, in which:
Fig. 1 depicts a block diagram of a system comprising a computing device for providing task reminder data associated with calendar event data, according to non-limiting embodiments;
Fig. 2 shows a block diagram of a flow chart of a method providing task reminder data associated with calendar event data, according to non-limiting embodiments;
Figs. 3 and 4 depict representations of data on a display device for generating calendar event data and a list of tasks associated therewith, according to non-limiting embodiments;
Fig. 5 illustrates a representation of data on a display device for providing a reminder of the list of task associated with a calendar event, according to non-limiting embodiments;
Fig. 6 depicts a block diagram of a system comprising a computing device for providing task reminder data associated with calendar event data, according to non-limiting embodiments;
Fig. 7 depicts a block diagram of a computing device for providing task reminder data, according to the prior art; and
Fig. 8 depicts a block diagram of a computing device for providing task reminder data, according to the prior art.

### DETAILED DESCRIPTION OF THE EMBODIMENTS

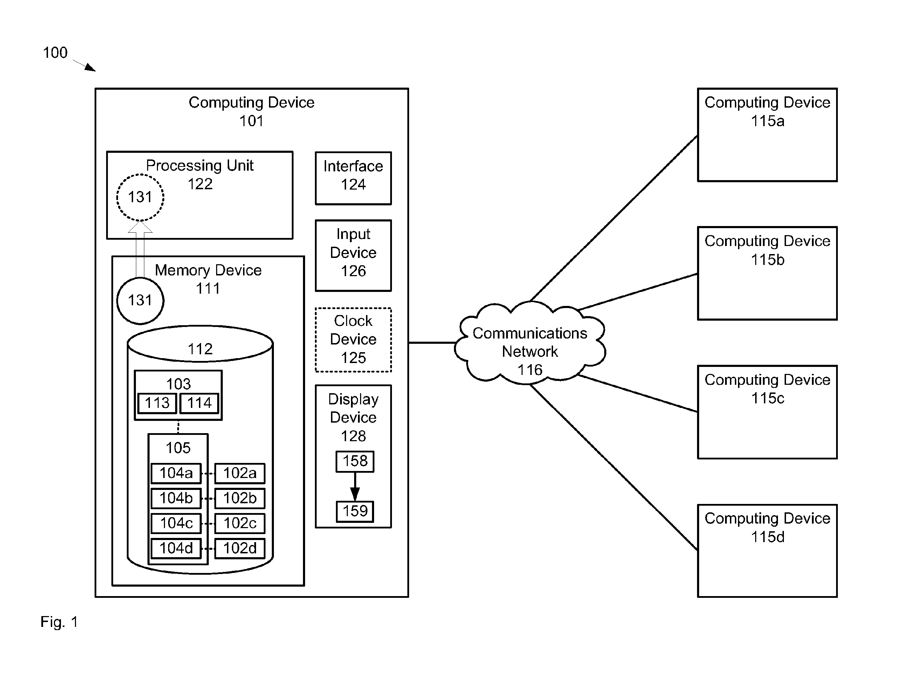

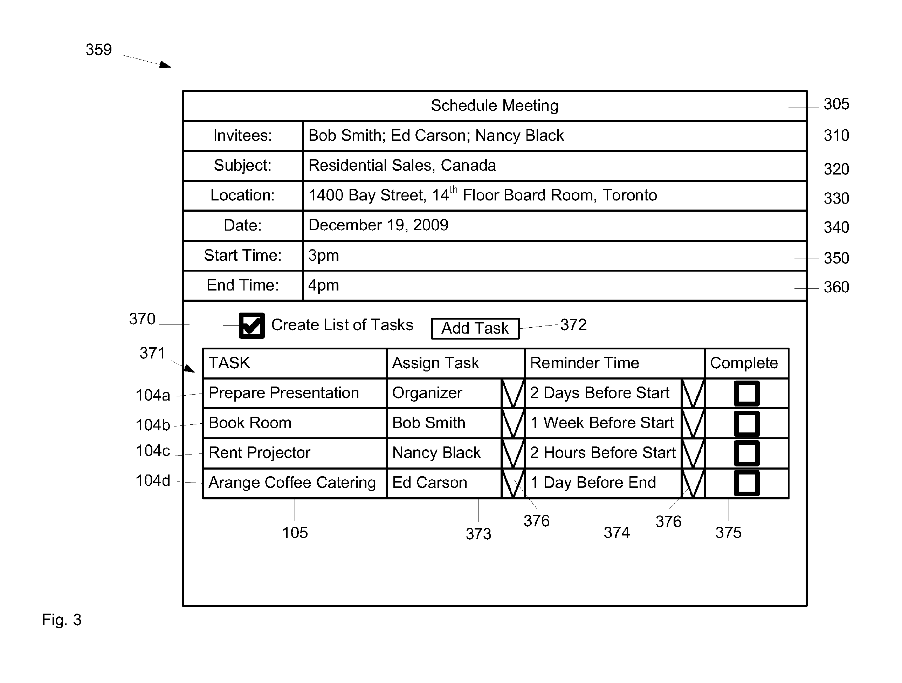

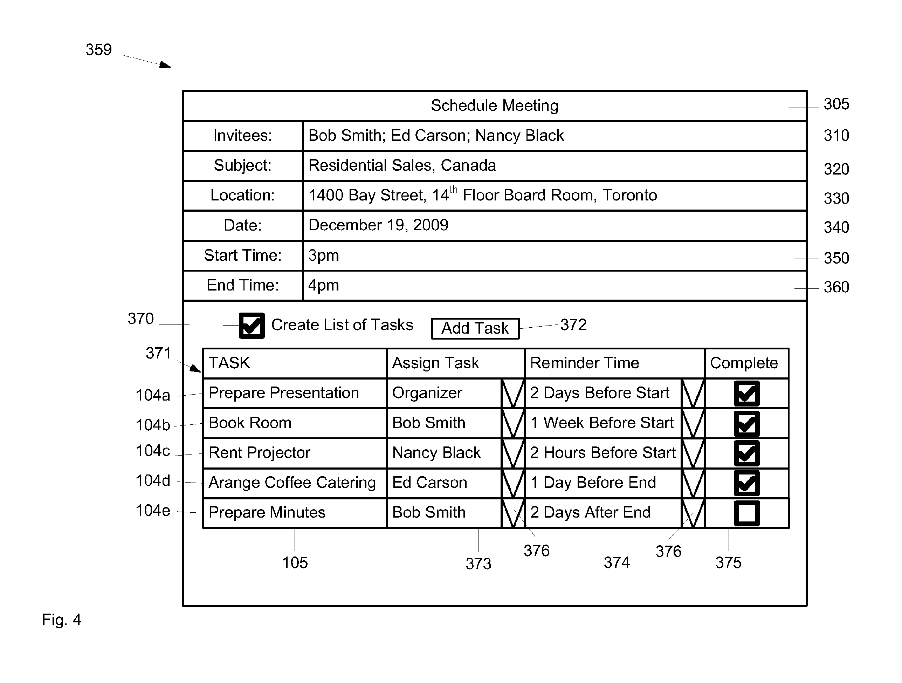

Fig. 1 depicts a block diagram of a system 100 comprising a computing device 101 for providing task reminder data 102a, 102b, 102c, 102d associated with calendar event data 103, according to non-limiting embodiments. It is understood that task reminder data 102a, 102b, 102c, 102d (collectively task reminder data 102 and generically task reminder data 102) are each associated with respective task data 104a, 104b, 104c, 104d (collectively task data 104 and generically task data 104) in a list 103 of tasks 105, each set of task data 104 associated with a respective task that is to be completed in association with a calendar event represented by calendar event data 103, including but not limited to a scheduled meeting, an appointment, and the like. Task reminder data 102, calendar event data 103, task data 104 and list 105 can be stored in a memory device 111 of computing device 101, for example in a calendar database 112. Calendar event data 103 generally comprises start time data 113 and an end time 114 associated with the calendar event. Start time data 113 comprises a time that the calendar event is to start (e.g. 3pm, for example see Figs. 3 and 4) and end time data 114 comprises a time that the calendar event is to end (e.g. 4pm, for example see Figs. 3 and 4). Though not depicted, calendar event data 103 can further comprise an indication of the duration of the associated calendar event, such a length of time of the calendar event and/or an end time of the calendar event. In some embodiments, calendar event data 103 can further comprise a date upon which the calendar event is to occur (e.g. December 19, 2009, for example see Figs. 3 and 4).

It is understood that the format in which task reminder data 102, calendar event data 103, task data 104, list 105, start time data 113, end time data 114 etc., is generally non-limiting. Furthermore, it is generally understood that the term "data" can refer to a single database field and/or a plurality of database fields. Furthermore, it is understood that the term "data" is not to be considered unduly limiting and can refer to any suitable data, information, and the like which can be stored in a memory, such as memory device 111. In some embodiments, suitable data can be stored in a single database field in calendar database 112 or in a plurality of fields in calendar database 112.

It is further understood that while depicted exemplary embodiments of list 105 comprises four sets of task data 104, and associated reminder data 102, in other embodiments the number of sets of task data 104 and associated reminder data 102 can be any suitable number, and is generally non-limiting.

It is further understood that a first subset of the tasks associated with task data 104 can be categorized for completion before a start time of the calendar event, a second subset of the tasks can be categorized for completion during the calendar event, and a third subset of the tasks can be categorized for completion after the calendar event.

System 100 can further comprise computing devices 115a, 115b, 115c, 115d (collectively computing devices 115 and generically a computing device 115) in communication with computing device 101 via a communication network 116. While depicted exemplary embodiments comprises four computing devices 115, in other embodiments the number of computing devices 115 can be any suitable number, and is generally non-limiting. It is understood that each computing device can be associated with an identifier of an attendee of the calendar event, as described below.

Computing device 101 comprises a processing unit 122, a communications interface 124 and memory device 111, all in communication, for example, via a computing bus (not depicted). In some embodiments, computing device 101 further comprises a clock device 125 from which the current time can be determined, for example via a suitable interaction between processing unit 122 and clock device 125. In some embodiments, however, computing device 101 can determine the current time via an external clock device, for example an external clock device in communication with computing device 101 via any suitable wired or wireless network (e.g. computing device 101 an request a current time from a time server via a network). In still other example embodiments, the processing unit 122 has an internal clock device that serves the same purpose as the clock device 125. In example embodiments described herein, computing device 101 further comprises an input device 126 and a display device 128. In other example embodiments, at least one of input device 126 and display device 128 can be external to computing device 101, e.g. when computing device 101 comprises a personal computer; in these embodiments, computing device 101 is in communication with input device 126 and display device 128 via any suitable wired or wireless link.

Computing device 101 further comprises an application 131 stored in memory device 111 and processable by processing unit 122. In particular, application 131 comprises a calendaring application, as described below.

Computing device 101 comprises any suitable computing device for controlling display device 128 to provide a representation of a representations of task reminder data 102, task data 104, list 105, and for processing application 131, including but not limited to any suitable combination of a desktop computer, a laptop or notebook computer, a PDA, a cellular or mobile phone, a portable electronic device, or the like. Other suitable types of computing devices are within the scope of present embodiments.

Memory device 111 can be any suitable one of or combination of volatile memory, non-volatile memory, RAM (random access memory), ROM (read only memory), hard drive, optical drive, or the like.

Processing unit 122 can comprise any suitable processor, or combination of processors, including but not limited to a microprocessor, CPU (central processing unit), or the like.

Communications interface 124 is enabled to communicate with computing devices 115 via communications network 16, for example to transmit and receive calendar events, e-mail, messages, attachments, and the like. Accordingly, communications interface 124 is enabled to communicate according to any suitable protocol which is compatible with communications network 116, including but not limited to packet based protocols, Internet protocols, analog protocols, cell phone protocols (1X, UMTS (Universal Mobile Telecommunications System), CDMA (Code division multiple access), GSM (Global System for Mobile communications), and the like), WiFi protocols, WiMax protocols and/or a combination of these. Other suitable protocols are within the scope of present embodiments. In embodiments where input device 126 and display device 128 are external to computing device 101, communications interface 124 is further enabled to communicate with input device 126 and display device 128, either wired or wirelessly as desired, via any suitable protocol.

Input device 126 is generally enabled to receive input data, and can comprise any desired one of or combination of suitable input devices, including but not limited to a keyboard or keypad, a pointing device, a mouse, a trackball, a thumbwheel, a touchpad, a touch screen or the like.

Display device 128 comprises circuitry 158 for generating a representation 159 of calendar application 131 and/or task reminder data 102 and/or calendar event data 103 and/or task data 104 and/or list 105 etc. Display device 128 can include any one of or suitable combination of CRT (cathode ray tube) and/or flat panel displays (e.g. LCD (liquid crystal displays), OLED (organic light emitting diode), plasma, touchscreen displays and the like). Circuitry 158 can include any suitable circuitry for controlling the CRT and/or flat panel displays etc., including but not limited to display buffers, transistors, electron beam controllers, LCD cells, plasmas cells, phosphors etc. In particular, display device 128 and circuitry 158 can be controlled by processing unit 122 to generate representation 159.

Each computing device 115 can be substantially similar to computing device 101 and, though not depicted, can each comprise a respective processing unit, a communications interface, a memory device, and be associated with a clock device, an input device and a display device, each substantially similar to processing unit 122, communications interface 124, memory device 111, clock device 125, input device 126 and display device 128.

Communications network 116 can comprise any suitable wired or wireless communications network, including but not limited to packet based networks, the Internet, analog networks, cell phone networks (1X, UMTS, CDMA, GMS, and the like), WiFi networks, WiMax networks and/or a combination of these.

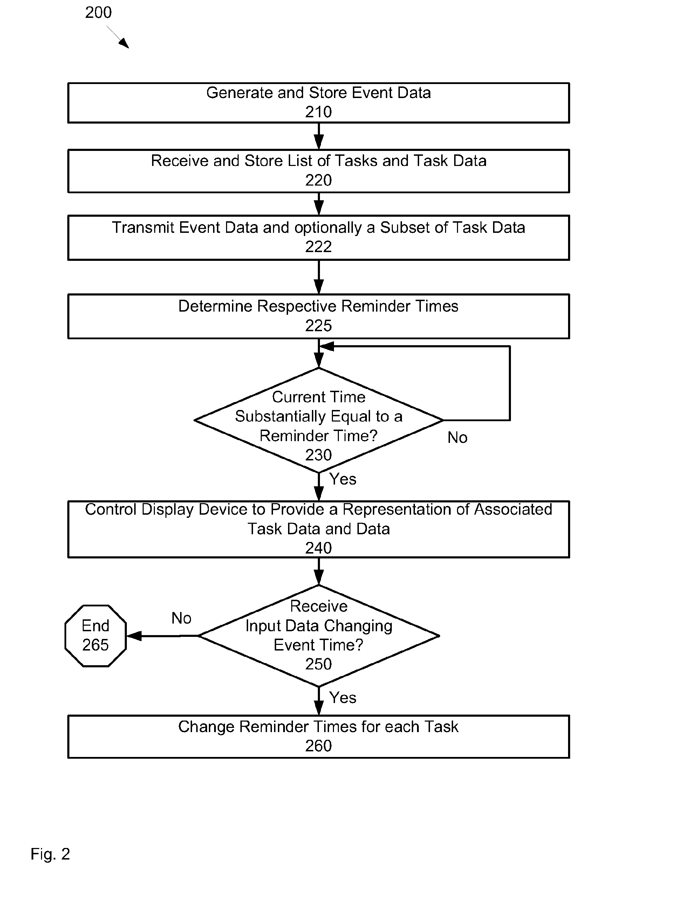

Referring now to Fig. 2, there is shown a method 200 for providing reminders associated with calendar event data stored in a memory device of a computing device, the calendar event data comprising start time data and duration data associated with a calendar event, the start time data representative of a start time of the calendar event and said duration data associated with a length of said calendar event. In order to assist in the explanation of method 200, it will be assumed that method 200 is performed using system 100. Furthermore, the following discussion of the method 200 will lead to a further understanding of system 100 and its various components. However, it is to be understood that system 100 and/or the method 200 can be varied, and need not work exactly as discussed herein in conjunction with each other, and that such variations are within the scope of present embodiments.

At step 210, calendar event data 103 is generated and stored in memory device 111. At step 220, list 105 of tasks associated with calendar event data 103 is received at processing unit 122 and stored in memory device 111, in association with calendar event data 103. Each respective task in list 105 is associated with task data 104, which can also be stored at step 220. Furthermore, in some embodiments, when list 105 is received and stored in memory device 111, list 105 can be stored in calendar event data 103 in memory device 111. In some embodiments, list 105 can be received via input device 126, but can also be received via e-mail, via interface 124, or any other suitable interface. Example embodiments where task data 104 of list 105 can be received are described below. Furthermore, respective task data 104 in list 105 can be received differently, with some sets of task data 104 received via input device 126 and others received via e-mail and/or voice notes and/or a camera etc.

In some embodiments, as will be described below, each task data 104 each comprises a respective identifier of an invitee to the calendared event assigned to complete an associated task. In these embodiments, at step 222, calendar event data 103 can be transmitted to suitable computing devices 115, along with a subset of task data 104 associated with a given respective identifier. Each computing device 115 to which calendar event data 103 is transmitted is associated with the respective identifier, such that a display device associated with a respective computing device 155 can be controlled to provide a representation of the subset in association with calendar event data 103. Hence, in some of these embodiments, a subset of list 105 and/or a subset of a task data 104 and/or a subset of task reminder data 102 can be transmitted with calendar event data 103.

At step 225, processing unit 122 determines respective reminder times for each set of task data 104 and causes the respective reminder times to be stored in respective associated task reminder data 102, such that a display device can be controlled to provide respective representations of task data 104, in association with calendar event data 103, at respective times substantially similar to each respective reminder time.

In some exemplary embodiments, respective reminder times for each set of task data 104 can be determined via receipt of input data is received from input device 126, the input data comprising the respective reminder times. For example, a representation of the calendar application 131 can include a field indicating a time at which a reminder for each task in list 105 is to be provided (e.g. see Fig. 3, described below).

In some embodiments, at least a subset of each respective reminder time can comprise a time relative to start time data 113 or end time data 114 for providing a representation of associated task data 104. For example a time relative to start time data 113 or end time data 114 can be a given time period (e.g. a given number of minutes, hours, days and/or weeks) before or after a start time in start time data 113 or and end time in end time data 114. Non-limiting example of times relative to at least one start time data 113 and end time data 114 can comprise 2 days before a time in start time data 113, 20 minutes after a time in start time data 113, 20 minutes before a time in end time data 114 and 1 day after a time in end time data 114.

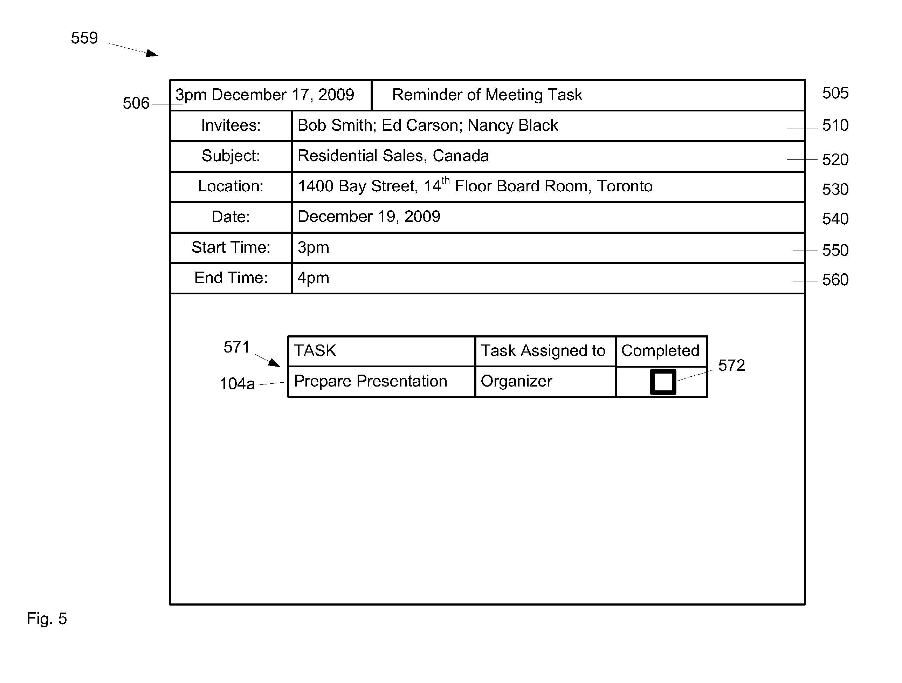

In further example embodiments, input data is received from input device 126, the input data comprising a duration of time (e.g. 2 days) before or after the start time or the end time that display device 128 is to be controlled to provide a respective representation of associated task data 104 (e.g. see Fig. 5, described below). In these embodiments, the reminder time is determined from the predetermined duration and the start time data 113: specifically the reminder time is determined by subtracting or adding the predetermined duration to the start time data 113 (e.g. if the calendar event starts at 3:00pm on December 19, 2009 and the duration of time is 2 days prior to the start time, then the reminder times is determined to be 3:00pm on December 17, 2009; if the duration of time is 2 days after to the start time, then the reminder times is determined to be 3:00pm on December 21, 2009, for example for tasks that are to be completed after the calendar event).

In some embodiments, such relative respective reminder times for each set of task data 104 are determined from a default reminder time, for example 2 days before a time in start time data 113. In these embodiments, there is an assumption that a reminder for any task in list 105 is to be provided 2 days before the start of the calendar event. Default reminder times can be configured as desired, for example via application 131, and stored in memory device 111.

In yet further example embodiments, input data is received from input device 126, the input data comprising a duration of time (e.g. 2 hours) before or after a time in end time data 114 that display device 128 is to be controlled to provide a respective representation of associated task data 104. In these embodiments, the reminder time is determined from the duration of time (e.g. 2 hours) before or after the end time. Specifically, the reminder time is determined by subtracting duration of time from the end time (e.g. if the calendar event is determined to end at 4:00pm and the duration of time is 2 hours after the end time, then the reminder times is determined to be 6:00 pm; if the duration of time is 2 hours before the end time, then the reminder time is determined to be 2:00 pm).

In some embodiments, at least a subset of each respective reminder time can comprise an absolute date and/or time, that is not relative to at least one of start time data 113 and end time data 114. For example, in some embodiments, a given task may need to be completed by a certain date/time due to time sensitive events (e.g. a vacation).

The reminder time can be stored in memory device 111 as task reminder data 102, as depicted in Fig. 1.

Steps 210 to 225 can occur in any suitable order and/or in parallel with each other. For example, Fig. 3 depicts non-limiting embodiments of representation 359 comprising a view of calendar application 131 in which task reminder data 102, calendar event data 103, task data 104 and list 105 are generated. In some embodiments, representation 159 comprises representation 359. In any event, in depicted embodiments representation 359 comprises a header 305 including text data "Schedule Meeting", indicative that a calendar event is being scheduled. In some embodiments, identifiers of invitees can be selected and/or entered via an optional "Invitee" field 310 and to which a meeting invitation can be transmitted; hence it is understood that that each identifier in field 310 can be associated with an identifier of a network address associated with a respective invitee and/or a computing device associated with a respective invitee. In some embodiments, subject data for the calendar event can be selected and/or entered, as desired, via a "Subject" field 320. Location data for the calendar event can be selected and/or entered, as desired, via a "Location" field 330, and a date, start and end times for the calendar event can be selected and/or entered via respective "Date", "Start Time" and "End Time" fields 340, 350, 360. In particular, in these embodiments, "Start Time" and "End Time" fields 350, 360 correspond respectively to start time data 113 and end time data 114. In other embodiments, rather than "End Time Field", representation 359 can comprise a "Meeting Length" field (and the like), in which the length of time over which the meeting is scheduled to occur can be selected and/or entered (e.g. 1 hour), and from which end time data 114 can be determined. It is understood that calendar even data 102 is generated by processing the data in fields 310-360.

Furthermore, in these example embodiments, representation 359 comprises a checkbox 370 which, when activated (as depicted), indicates that a "Create List of Tasks" option has been selected and hence input can be received from input device 126 to generate list 105. For example, list 105 can be generated via a "TASK" column in a table 371 comprising data representative of tasks associated with the calendar event. For example, as depicted list 105 in the "TASK" column comprises text data: "Prepare Presentation", "Book Room", "Rent Projector", and "Arrange Coffee Catering", respectively corresponding to task data 104a, 104b, 104c and 104d. It is understood that each subset of text data within list 105 is representative of a task associated with the calendar event, and that each row of table 371 is associated with a task. The text data in each field of the column representing list 105 can be Table 371 can be generated via a virtual button 372, "Add Task", which when activated causes a new row/new task to be added to table 371, which can then be populated. In some embodiments, upon activation of checkbox 370, a first row is generated in table 371. In these embodiments, as depicted, the add task 372 has been activated at least three times adding three additional rows to table 371 for a total of 4 rows. In other embodiments, table 371 can comprise any suitable number of rows. If the number of rows exceeds the space available at a screen of display device 128, a scroll button (not depicted), or equivalent can be provided to access any rows not provided at display device 128.

Table 372 can further comprise a column 373 via which input data can be received for assigning a task to an invitee of the calendar event, a column 374 via which input data can be received for determining respective reminder times of associated tasks, and a column 375 via which input data can be received for indicating whether a task has been completed.

In exemplary embodiments, each row of columns 373, 374 can further comprise a button 376 for activating a pulldown menu via which input data can be received indicating a selection for the associated row. For example, in column 373, each row can comprise a pulldown menu comprising a list of the identifiers provided in field 310, which can be accessed via button 376, such a list including an "Organizer" identifier, and the like, identifying the organizer of the calendar event. Similarly, in column 373, each row can comprise a pulldown menu comprising a list of reminder times, which can be accessed via button 376. Such a list of reminder times can be populated using pre-set data stored in memory device 111, such a given number of pre-set times before and after one of a given start time and a given end time to the calendar event, for example the start and end times, respectively in fields 250, 260.

In alternative embodiments, at least a subset of fields of each of columns 373, 374 can be populated via receipt of alphanumeric input data from input device 124 entered into the fields. Any alphanumeric input can be checked against accepted format data which can be stored in memory device 111 and/or against identifiers in field 310.

In yet further embodiments, the fields of each of columns 373, 374 can be populated automatically: for column 373, the fields can be populated automatically using the identifiers provided in field 310, and an "Organizer" identifier, for example in an order of the identifiers provided in field 310; for column 374, the fields can be populated automatically using a default reminder time, for example 1 day prior to start.

It is understood that, in some example embodiments, list 105 is generated upon receipt of input data representative of tasks in list 105 via representation 359; the input data can be received from input device 126 and then stored in memory device 111, in association with calendar event data 103, as list 105. Furthermore, task data 104 is generated by processing each of the rows in table 371, and task reminder data 102 is generated by processing column 374 to determine when a reminder is to be provided.

It is further understood that input data can be received in order to update list 105. For example, calendar event data 103 and/or list 105, as represented in representation 359, can be retrieved at any time before, during or after the calendar event, and edited, for example by receiving further data from input device 126. For example, list 105 can be updated by either adding or deleting tasks. A task can be deleted by at least one of: receiving input data indicating that it has been highlighted and a delete key at input device 126 activated; receipt of input data indicating that a virtual delete key (not depicted) and/or delete task menu item (not depicted) has been activated; receipt of input data indicating that a field of the "TASK" column has been deleted.

In any event, such an update can occur if the tasks associated with the calendar event change. For example, during the calendar event, it can be agreed that minutes of the calendar event are to be prepared. Hence, the new task, "Prepare Minutes" can be added to list 105, as in Fig. 4, which is substantially similar to Fig. 3, with like elements having like reference numbers. The new task "Prepare Minutes" can be added to list 105 during the calendar event or after the calendar event. The new task "Prepare Minutes" can then be stored in memory device 111, in list 105 as task data 104e. Similarly, input data representative of removing at least one item from list 105 can be received and list 105 can be subsequently updated by removing the at least one item from list 105.

It is understood new tasks can be created during the calendar event and/or after the calendar event, as long as duration for notification has not passed. For example in Fig.4, the reminder time for task data 104e comprises "2 Days After End"; if task data 104e is added more than 2 days after the end of the calendar event, a reminder "Prepare Minutes" will be provided immediately as the reminder time has passed. In some embodiments the reminder time in column 374 in representation 359 can be limited to times that occur after a present time and/or a time that that the new task is added.

In some example embodiments, receiving the input data representative of tasks in list 105 occurs in association with generating calendar event data 103, as depicted in representation 359.

Returning now to Fig. 2, at step 230 a current time is compared to a given respective reminder time via clock device 125. For example, the current time is retrieved from clock device 125 and compared to times in task reminder data 102. If no match is found, step 230 is repeated, for example periodically, until the current time is determined to substantially match at least one of the reminder time determined at step 225. It is understood that a match between the current time and the reminder time need not be an exact match. For example, if the reminder time comprises 3pm, on a given day (e.g. 2 days before the start of the calendar event) and the current time comprises, 3:00:38pm (i.e. hours:minutes:seconds) on the given day, then a substantial match has occurred. It is further understood that, in some embodiments, if step 230 is repeated with a period that causes the current time to surpass the reminder time, then a substantial match can be determined between the reminder time and a current time greater than the reminder time: for example, if the reminder time comprises 3pm and the current time comprises, 3:03:57pm, then a substantial match has occurred. It is yet further understood that, in some embodiments, a substantial match can be determined between the reminder time and a current time that is within a given time period of the reminder time, for example within 5 minutes of the reminder time: hence, in some of these embodiments, a substantial match can be determined if the current time is less than the reminder time. For example, if the reminder data comprises 4pm and the current time comprises, 3:55:32pm, then a substantial match has occurred. It is understood that the given time period within which a substantial match can be determined can be set via receipt of input data (e.g. the given time period can be indicated within a field in representation 359).

At Step 230, when the current time substantially matches a given respective reminder time stored in task reminder data 102, in some embodiments display device 128 is controlled to provide a representation of associated task data 104 in association with calendar event data 103 at step 240 as a reminder to complete the associated task. For example, at step 240 processing unit 122 controls the display device 128 to provide a representation of associated task data 104 in association with calendar event data 103. Returning to the exemplary embodiment depicted in Fig. 3, a representation of associated task data 104a and calendar event data 103 is illustrated in representation 559 depicted in Fig. 5, according to non-limiting embodiments. Representation 559 comprises elements similar to elements of representation 359 with like elements having like numbers, however preceded by a 5 rather than a 3; for example field 550 is similar to field 330. However representation 559 comprises a header 505 including exemplary text data "Reminder of Meeting Task", indicative that the data being provided in representation 359 is indicative of a reminder that the calendar event is over and/or is close to being over. In some embodiments, representation 359 further comprises an optional field 506 providing the current time and date. Representation 559 further comprises a representation 571 of the task associated with task 104a.

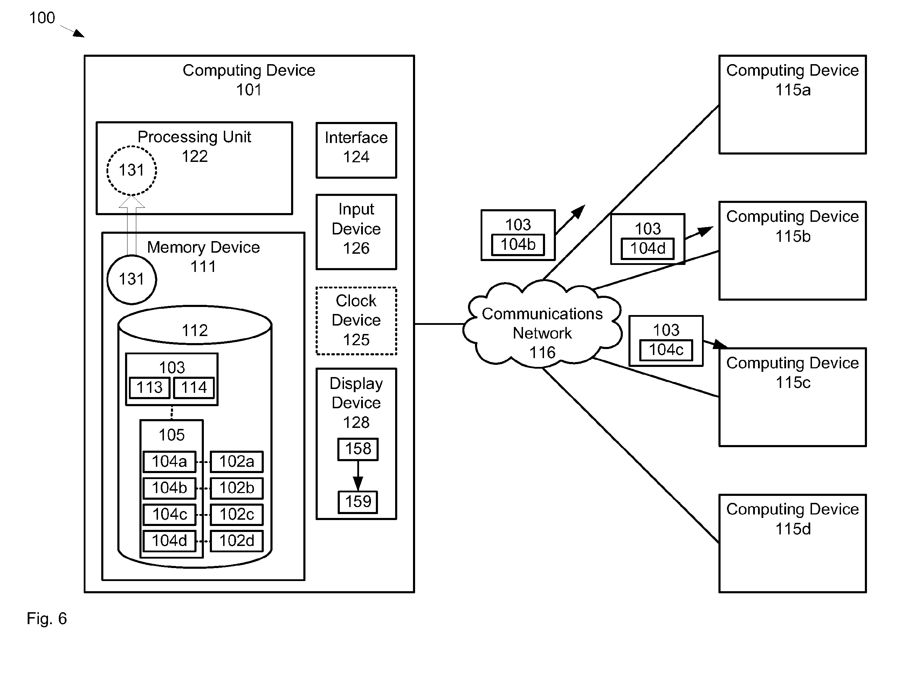

It is furthermore understood that reminders for tasks can be provided to only the participants to whom the task has been assigned, for example via column 373 in representation 359, as described below with reference to Fig. 6.

In depicted embodiments, representation 559 further comprises optional checkbox 572. In these embodiments, method 200 further comprises, at step 250, receiving input data representative of changing a status the task associated with representation 571 has changed from unchecked to checked. For example, input data can be received indicating that pointing device has been used to "click" on a checkbox 572, indicative that the status the task associated with representation 571 has changed. The change in status can be representative of the associated task being completed. The change in status can be further stored in the associated task data 104a, such that when processing unit 122 again controls computing device 101 to provide representation 359, for example as in Fig. 4, the associated checkbox in column 375 is checked, indicating that the task is complete.

In some embodiments, task completion check box status can transmitted to respective computing devices 101, 115 so that participants can be notified of what tasks have been completed and what tasks are still pending.

Attention is now directed to Fig. 6, which is substantially similar to Fig, 1 with like elements having like numbers. In embodiments depicted in Fig. 6, calendar event data 103 is transmitted to computing devices 115, along with at least a subset of task data 104 and/or task reminder data 102. In particular, Fig. 6 illustrates step 222 in embodiments where calendar event data 103 is be transmitted to computing devices 115 associated with the invitees listed in field 310 of representation 359, for example in a meeting invitation and/or an e-mail transmitted via communication interface 124 and communications network 116. In some of these embodiments, list 105 can be transmitted with calendar event data 103, while in other embodiments list 105 is not transmitted with calendar event data 103. In these latter embodiments, it is understood that list 105 remains local to computing device 101. For example, list 105 can remain local to computing device 101 if all tasks are assigned to the organizer of the calendar event.

In any event, representation 359 can be used in a non-limiting example, assuming that computing device 115a is associated with "Bob Smith", computing device 115b is associated with "Ed Carson", and computing device 115c is associated with "Nancy Black". In these embodiments, calendar event data 103 is transmitted to computing device 115a with task data 104b, calendar event data 103 is transmitted to computing deice 115b with task data 104c, and calendar event data 103 is transmitted to computing device 115c with task data 104b, as each of task data 104b, 104c, and 104d has been respectively assigned to "Bob Smith", "Nancy Black", and "Ed Carson". In other embodiments, the subset of task data 104 that is transmitted to each computing device 115a can be larger or smaller depending on the number of tasks assigned to each respective invitee associated with each computing device 115. Furthermore, in some of these embodiments, associated reminder task data 102 is also transmitted to each computing device, while in other embodiments, reminder task data for each associated task data 104 is determined at each computing device 115 from calendar event data 103 and the associated task data 104, as described above.

In any event, when calendar event data 103 and associated task data 104 arrive at a given computing device 115, calendar event data 103, associated task data 104, and associated task reminder data 102 are stored in a memory device of computing device 115 in association with one another. In these embodiments, steps 225 to 240 can occur at each computing device 115, such that a processing unit at each computing device 115 controls a display device at each computing device 115 to provide a representation of associated task data 104 in association with calendar event data 103, similar to representation 579 of Fig. 5. Hence, reminders for tasks can be provided to only the participants to whom the task has been assigned.

Furthermore, at each computing device 115, a representation similar to representation 359 can be provided, however showing only those tasks assigned to the invitee associated with the respective computing device 115. In this manner, each task assigned to the invitee associated with the respective computing device 115 can be edited and updated. For example, when a task is completed, checkbox similar to checkbox 572 can change status upon receipt of input data at computing device 115 indicating that the associated task is completed. Then change in status can be stored in task data 104 stored at computing device 115, and further the change in status can be transmitted to computing device 101 for storage in the associated task data 104 stored at computing device 101, indicating that an assigned task is completed. The change in status can be further transmitted and/or re-transmitted to any suitable computing device 115 to notify participants of which tasks have been completed.

Furthermore, at each computing device 115, new tasks can be associated with calendar event data 103. In these embodiments, new task data is generated and stored at each computing device 114 and also transmitted back to computing device 101 for storage in memory device 111 for storage in list 105, indicating that a new task has been added by an invitee. In some of these embodiments, changes/additions/deletions etc. to task data 104 at computing devices 115 can only occur if suitable permissions have been assigned to a respective invitee. For example, in some embodiments representation 359 can further comprise suitable means for associating permission data associated with a given invitee (e.g. a pulldown menu and the like), for example "Permission to Add/Delete/Change Tasks for Self", and "Permission to Add/Delete/Change Tasks for All Invitees" and "No Permission Granted to Add/Delete Change Tasks". 12. Furthermore, the permission data for changing the task data can comprise at least one of universal task permission data wherein a global permission is set for all invitees (e.g. no invitees can change tasks), individual task permission data (e.g. only certain tasks can be changed), and permission data for respective invitees to the calendared event (e.g. only certain invitees can change certain tasks).

Returning now to Fig. 2, method 200 can further comprise, at step 250, receiving input data, at processing unit 122, indicative that at least one of a start time and an end time of a calendar event associated with calendar event data 103 has respectively changed to a new start time and a new end time. If so, at step 260, for each task in list 105, a given respective reminder time is changed to a new given respective reminder time based on at least one of the new start time and the new end time when the given respective reminder time comprises a time relative to at least one of the start time and the end time for providing a representation of associated task data. Otherwise, method 200 ends at step 265.

In some embodiments, at step 260, a new given respective reminder time can constrained to at least one of days having a given property (for example, a given day can have the property of being designated as a business day) and times designated as free in calendar database 112. For example, calendar database 112 can comprise a schedule, with some days designated as business days (e.g. weekdays) and other days designated as vacation days (e.g. weekends, absence due to a vacation). Furthermore, within calendar database 112, calendar event data 103 can one of a plurality of sets of calendar event data, each of the plurality of sets of calendar data representative of a calendar event. Hence, the reminder time for the calendar event represented by calendar event data 112 can be constrained to times designated as free and/or on business days. This prevents reminders from being provided during meetings and/or on vacations/weekends when they might not have as much impact. For example, if a calendar event is schedule for a Wednesday, with a task reminder to be provided one day prior to the start of the calendar event, and the calendar event is then moved to a Monday, the task reminder would then be provided on Sunday where it might not have as much impact. Rather, the task reminder could be provided on the Friday before, or one business day prior, rather than simply one day prior. However, in some embodiments, if such a constraint causes the task reminder to be provided at a time where there is not enough time to complete the task, the constraint can further include logic that prevents task reminders from being moved to less than a given duration of time before the start of the calendar event (e.g. all task reminders must be provided at least business day prior to the start of the calendar event), except in embodiments where a task reminder is to occur during or after the end of the calendar event.

Furthermore, how a new given respective reminder time is to be constrained, and any logic associated with the constraints can be determined from settings in calendar application 131, and/or data stored in calendar database 112.

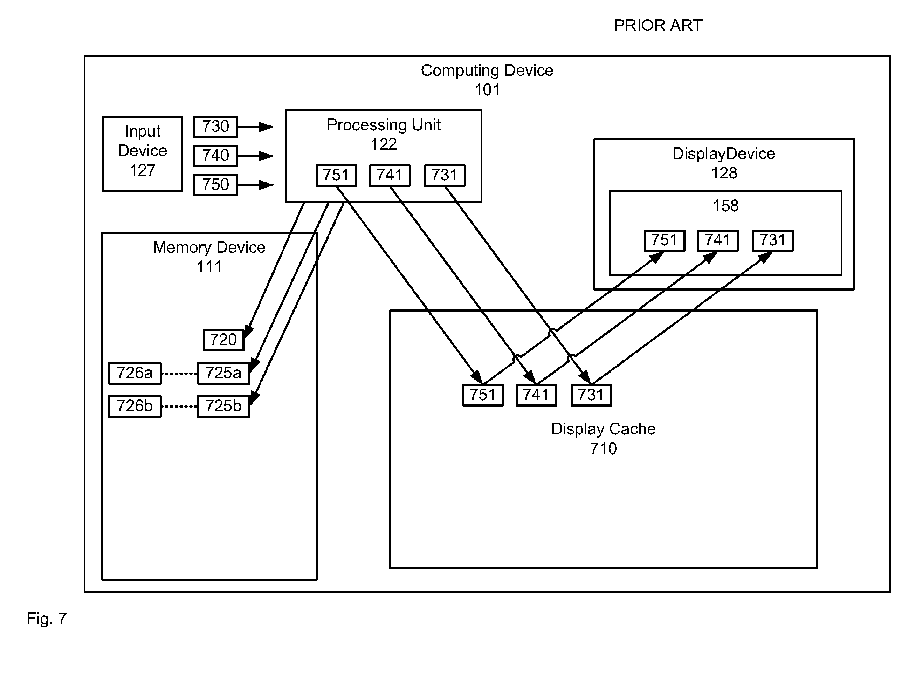

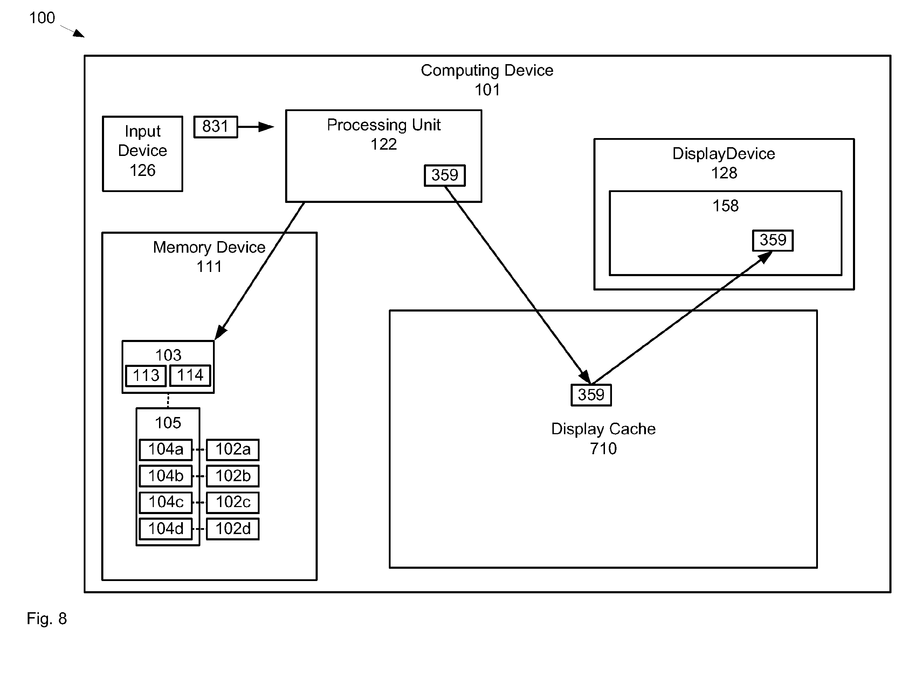

Attention is now directed to Figs. 7 and 8 which depict processing unit 122, memory device 111, input device 127 and display device 128 and circuitry 158 of computing device 101 in more detail, in order to illustrate particular technical advantages of embodiments provided herein. In particular, computing device 101 further comprises a display cache 710 which can be a separate element in computing device 101 and/or an element of at least one of memory device 111 and circuitry 158. Fig. 7 depicts the interactions between the various elements of computing device 101 according to the prior art when a calendar event is scheduled by first generating calendar event data 720 and then a plurality of task data 725a-725b (collectively and generically task data 725), along with a plurality of task reminder data 726a-726b725b (collectively and task reminder data 726), task data 725 associated with tasks that are to be completed in association with the calendar event. While only two sets of task data 725 are shown in exemplary embodiments, it is understood that more or fewer sets of task data 725 are within the scope of present embodiments.

First, input data 730 is received indicative that calendar event data 720 is to be generated. Processing unit 122 then causes a representation 731 to be provided at display device 128, representation 731 for receiving input data for generating calendar event data 720 by first causing the data for generating representation 731 to be stored in display cache 710 and then sent to circuitry 158. Circuitry 158 is then controlled to provide representation 731.

Once calendar event data 720 is generated and stored, input data 740 is received indicative that task data 725a and task reminder data 726a is to be generated. Processing unit 122 then causes a representation 741 to be provided at display device 128, representation 741 for receiving input data for generating task data 725a and task reminder data 726a by first causing the data for generating representation 741 to be stored in display cache 710 and then sent to circuitry 158. Circuitry 158 is then controlled to provide representation 741.

Once task data 725a is generated and stored, input data 750 is received indicative that task data 725b and task reminder data 726b is to be generated. Processing unit 122 then causes a representation 751 to be provided at display device 128, representation 751 for receiving input data for generating task data 725b and task reminder data 726b by first causing the data for generating representation 751 to be stored in display cache 710 and then sent to circuitry 158. Circuitry 158 is then controlled to provide representation 751.

Furthermore, as each of calendar event data 720, task data 725a, task reminder data 726b, task data 725b and task reminder data 726b are generated via receipt of further input data from input device 122, processing unit 122 stores each of calendar event data 720, task data 725a, task reminder data 726b, task data 725b,a and task reminder data 726b in memory device 111.

Each step of receiving and processing each input data 730, 740, 750, generating data for each representation 731, 741, 751, controlling circuitry 158 by first sending and storing the data for each representation 731, 741, 751 to display cache 710 and then to circuitry 158 requires power, and further requires management of display cache 710 and further causes circuitry 158 to cycle to at least three different states (i.e. one state for each of representations 731, 741, 751), for example different states of pixels in an LCD.

When at least one of a start time and an end time of an event associated with calendar event data 720 is to change to a respective new start time and new end time, further input data (similar to input data 130) must be received to cause representation 731 to be redisplayed, requiring generation and storage of data for regenerating representation 731 to be stored in display cache 710. Then, the respective time for displaying each respective task reminder data 726a, 726b must be manually changed by receiving further input data, similar to input data 740, 750, which then causes representations 741, 751 to be redisplayed, in turn, and respective data for regenerating each of representations 741, 751 to be re-stored in display cache 710. Further input data is then received to receive the new reminder times for each respective task reminder data 726a, 726b, and further interaction between processing unit 122 and memory device 111 occurs to store the new respective reminder times.

In essence, then, input data 730, 740, 750 are each received twice, once for generating each of calendar event data 720, task data 725a, 725b and task reminder data 726a, 726b, and once for changing each of calendar event data 720, task data 725a, 725b and task reminder data 726a, 726b. Hence, in this process, data for generating representations 731, 741, 751 are each stored twice, as is generating representations 731, 741, 751 at display device 128, etc.

In contrast to this, when method 200 is implemented in computing device 101, as depicted in Fig. 8, only a single set of input data 831 is received indicative that representation 359 of Fig. 3 is to be generated. Data for causing representation 359 is sent to display cache 710 and then to circuitry 158. Hence, one representation 359 is used to cause calendar event data 103, task data 104 and task reminder data 102 to be generated and stored in memory device 111, saving on battery power, management of display cache 610 and cycling of circuitry 158.

Furthermore, when at least one of a start time and an end time of an event associated with calendar event data 720 is to change to a respective new start time and new end time, only representation 359 is generated a second time, the new start time and/or end time is received via input device 126, and a given respective reminder time is automatically changed to a new given respective reminder time based on at least one of the new start time and the new end time. Again, only one representation 359 is used to cause calendar event data 103, task data 104 and task reminder data 102 to be updated and stored in memory device 111, again saving on battery power, management of display cache 610 and cycling of circuitry 158.

Hence, the present specification further provides a method for managing a display cache in a computing device when providing task reminder data associated with calendar event data stored in a calendar database associated with a computing device, the computing device comprising a processing unit interconnected with a memory device, the display cache and an associated display device. The method comprises: generating, at the processing unit, data for representing a graphical user interface for receiving a list of tasks associated with the calendar event data, each respective task in the list of tasks associated with task data; controlling the display device to provide the graphical user interface by first storing the data in the display cache and then causing circuitry at the display device to be controlled to provide the graphical user interface by transferring the data from the display cache to the circuitry; determining, at the processing unit, respective reminder times for each task based on data received from an input device associated with the computing device such that the display device can be controlled to provide respective representations of the task data, in association with the calendar event data, at respective times substantially similar to each respective reminder time; storing the list of tasks in the memory device in association with the calendar event data; receiving input data, at the processing unit, the input data indicative that at least one of a start time and an end time of an event associated with the event data has changed to a respective new start time and new end time; and, for each task in said list of tasks, automatically changing a given respective reminder time to a new given respective reminder time based on at least one of the new start time and the new end time when the given respective reminder time comprises a time relative to at least one of the start time and the end time for providing a representation of associated task data.

Those skilled in the art will appreciate that in some embodiments, the functionality of computing devices 101, 115 can be implemented using pre-programmed hardware or firmware elements (e.g., application specific integrated circuits (ASICs), electrically erasable programmable read-only memories (EEPROMs), etc.), or other related components. In other embodiments, the functionality of computing devices 101, 115 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for providing task reminder data associated with event data stored in a database (112) associated with a computing device (101), said computing device (101) comprising a processing unit (122) interconnected with a memory device (111), said method comprising:
receiving, at said processing unit (122), a list of tasks associated with said event data, each respective task in said list of tasks associated with task data;
determining, at said processing unit (122), respective reminder times for each said task such that a display device (128) can be controlled to provide respective representations of said task data, in association with said event data, at respective times substantially similar to each said respective reminder time;
storing said list of tasks in said database (112) in association with said event data;
receiving input data, at said processing unit (122), said input data indicative that at least one of a start time and an end time of an event associated with said event data has changed to a respective new start time and new end time;
and, for each task in said list of tasks,
changing a given respective reminder time to a new given respective reminder time based on at least one of said new start time and said new end time when said given respective reminder time comprises a time relative to at least one of said start time and said end time for providing a representation of associated task data.

2. The method of claim 1, further comprising:
comparing a current time to a given respective reminder time via a clock device; and
when said current time substantially matches said given respective reminder time, controlling a display device (128) to provide a representation of associated task data in association with said event data.

3. The method of claim 1 or 2, wherein said new given respective reminder time is constrained to at least one of days having a given property and times designated as free in an associated database (112).

4. The method of any of claims 1 to 3, wherein said task data each comprises a respective identifier of an invitee to said calendared event assigned to complete an associated task.

5. The method of claim 4, further comprising transmitting said data to a second computing device (101) associated with said respective identifier, along with a subset of said task data associated with a given respective identifier, such that a display device (128) associated with said second computing device (101) can be controlled to provide a representation of said subset in association with said event data.

6. The method of any preceding claim, wherein each said reminder time data comprises a time for providing a reminder that an associated task is to be completed.

7. The method of any preceding claim, wherein a first subset of said tasks are categorized for completion before a start time of said event, a second subset of said tasks are categorized for completion during said event, and a third subset of said tasks are categorized for completion after said event.

8. The method of any preceding claim, wherein said receiving said list of tasks comprises receiving input data representative of each said task, said method further comprising storing said input data in said memory device (111) in association with said event data for at least one of providing said representation of said task data and updating said list of tasks.

9. The method of claim 8, wherein said receiving said input data representative of said tasks occurs in association with generating said event data.

10. The method of any preceding claim, further comprising receiving input data representative of at least one of adding and removing at least one task from said list of tasks, and updating said list of tasks by respectively adding said at least one item to said list of tasks and removing said at least one item from said list of tasks, wherein said receiving said input data occur at least one of before said calendared event, during said event, and after said calendared event.

11. The method of any preceding claim, wherein said task data comprises permission data for changing said task data, said permission data comprising at least one of universal task permission data, individual task permission data, and permission data for respective invitees to said calendared event.

12. A computing device (101) for providing task reminder data associated with event data, said computing device (101) comprising:
a processing unit (122) interconnected with a memory device (111), said processing unit (122) having access to a database (112) storing said data,
said processing unit (122) enabled to implement any of the steps of the method of claims 1 to 11.

13. A computer program product, comprising a computer usable medium having a computer readable program code adapted to be executed to implement any of the steps of the method of claims 1 to 11.

## Amended claims

### Amended claims in accordance with Rule 137(2) EPC.

**1.** A method for providing task reminder data associated with event data stored in a database (112) associated with a computing device (101), said computing device (101) comprising a processing unit (122) interconnected with a memory device (111), said method comprising:
receiving, at said processing unit (122), a list of tasks associated with said event data, said list of tasks comprising sets of task data;
determining, at said processing unit (122), respective reminder times for each said set of task data such that a display device (128) can be controlled to provide respective representations of each said set of task data, in association with said event data, at respective times substantially similar to each said respective reminder time;
storing said list of tasks in said database (112) in association with said event data;
receiving input data, at said processing unit (122) from an input device (126), said input data indicative that at least one of a start time and an end time of an event associated with said event data has changed to a respective new start time and new end time; and, for each set of task data in said list of tasks,
changing a given respective reminder time to a new given respective reminder time based on at least one of said new start time and said new end time when said given respective reminder time comprises a time relative to at least one of said start time and said end time for providing a representation of associated task data.

**2.** The method of claim 1, further comprising:
comparing a current time to a given respective reminder time via a clock device; and
when said current time substantially matches said given respective reminder time, controlling a display device (128) to provide a representation of associated task data in association with said event data.

**3.** The method of claim 1 or 2, wherein said new given respective reminder time is constrained to at least one of days having a given property and times designated as free in an associated database (112).

**4.** The method of any of claims 1 to 3, wherein each said set of task data comprises a respective identifier of an invitee to said calendared event assigned to complete an associated task.

**5.** The method of claim 4, further comprising transmitting said data to a second computing device (101) associated with said respective identifier, along with a subset of said sets of task data associated with a given respective identifier, such that a display device (128) associated with said second computing device (101) can be controlled to provide a representation of said subset in association with said event data.

**6.** The method of any preceding claim, wherein each said reminder time data comprises a time for providing a reminder that an associated task is to be completed.

**7.** The method of any preceding claim, wherein a first subset of said sets of task data are categorized for completion before a start time of said event, a second subset of said sets of task data are categorized for completion during said event, and a third subset of said sets of task data are categorized for completion after said event.

**8.** The method of any preceding claim, wherein said receiving said list of tasks comprises receiving input data representative of each said set of task data, said method further comprising storing said input data in said memory device (111) in association with said event data for at least one of providing said representations of said sets task data and updating said list of tasks.

**9.** The method of claim 8, wherein said receiving said input data representative of each said set of task data occurs in association with generating said event data.

**10.** The method of any preceding claim, further comprising receiving input data representative of at least one of adding and removing at least a first set of task data from said list of task data, and updating said list of task data by respectively adding said at least one item to said list of task data and removing said at least one item from said list of task data, wherein said receiving said input data occurs at least one of before said calendared event, during said event, and after said calendared event.

**11.** The method of any preceding claim, wherein said task data comprises permission data for changing said task data, said permission data comprising at least one of universal task permission data, individual task permission data, and permission data for respective invitees to said calendared event.

**12.** A computing device (101) for providing task reminder data associated with event data, said computing device (101) comprising:
a processing unit (122) interconnected with a memory device (111), said processing unit (122) having access to a database (112) storing said data, said processing unit (122) enabled to implement any of the steps of the method of claims 1 to 11.

**13.** A computer program product, comprising a computer usable medium having a computer readable program code adapted to be executed to implement any of the steps of the method of claims 1 to 11.
